# EUROPÄISCHE PATENTSCHRIFT

(11) **EP 3 497 202 B1**
(45) Veröffentlichungstag und Bekanntmachung des Hinweises auf die Patenterteilung: **04.10.2023**
(21) Anmeldenummer: 17752347.9
(22) Anmeldetag: 07.08.2017
(51) Int. Cl.: C12H 1/22, C12C 13/00

(54) **TANKAUSLAUF MIT WIRBELBRECHER UND MONTAGEVERFAHREN FÜR EINEN WIRBELBRECHER AM TANKAUSLAUF EINES TANKS**
TANK OUTLET HAVING A VORTEX BREAKER AND METHOD FOR MOUNTING A VORTEX BREAKER ON THE TANK OUTLET OF A TANK
SORTIE DE RÉSERVOIR DOTÉE D'UN DISPOSITIF ANTI-TOURBILLONS ET PROCÉDÉ D'ASSEMBLAGE POUR UN DISPOSITIF ANTI-TOURBILLONS À LA SORTIE D'UN RÉSERVOIR

(30) Priorität: 10.08.2016 DE 102016214857
(43) Veröffentlichungstag der Anmeldung: 19.06.2019
(73) Patentinhaber: GEA Tuchenhagen GmbH, 21514 Büchen (DE)
(72) Erfinder: DUTSCHMANN, Dean, 97318 Kitzingen (DE); KLEMME, Christian, 97318 Kitzingen (DE); BUMESTER, Bernd, 97318 Kitzingen (DE)
(74) Vertreter: Mader, Joachim
(86) Internationale Anmeldenummer: PCT/EP2017/069962
(87) Internationale Veröffentlichungsnummer: WO 2018/029152

(56) Entgegenhaltungen:
- EP-A1- 0 080 420
- CN-U- 202 295 963
- US-A1- 2004 155 368
- US-A1- 2009 206 044
- US-A1- 2013 206 263

## Beschreibung

### 1. Technisches Gebiet

Die vorliegende Erfindung betrifft einen Tankauslauf mit einem Wirbelbrecher und ein Verfahren zur Montage des Wirbelbrechers in einem Tankauslauf eines Tanks. Der Tank kann dabei ein Flüssigkeitstank sein, wie er bevorzugt in der Lebensmittelindustrie verwendet wird.

### 2. Stand der Technik

Tanks, insbesondere Flüssigkeitstanks werden zur Lagerung von Flüssigkeiten, Suspensionen oder anderen Fluiden verwendet, wie zum Beispiel zum Lagern von Bier oder dessen Vorprodukten in einer Brauerei. Die Tanks sind dabei in der Regel ausgelegt sehr große Mengen einer Flüssigkeit aufzunehmen, die zusätzlich noch unter Druck stehen kann. Die Tanks müssen daher eine sehr hohe Druckfestigkeit aufweisen und anerkannten Standards genügen. Der Nachweis erfolgt über sogenannte Druckprüfungen, welche nach jeder signifikanten Änderung an der Struktur des Tanks, wiederholt werden müssen, um die Sicherheit des Tanks zu gewährleisten. Bei einer strukturellen Umrüstung eines Drucktanks ist in der Regel eine erneute Druckprüfung notwendig, die kostenintensiv sein kann. Zu solchen strukturellen Umrüstungen gehören beispielsweise Schweißarbeiten am Tank.

Die Entleerung eines Tanks erfolgt in der Regel über einen Tankauslauf am Boden des Tanks. Wird ein Tank entleert, bildet sich aufgrund verschiedener Strömungseffekte an dessen Auslauf ab einem gewissen Füllstand ein Wirbel. Dabei dreht sich die Flüssigkeit in dem Tank um eine vertikale Achse, die näherungsweise mittig durch den Tankauslauf verläuft. Der Effekt der Wirbelbildung wird auch durch den Einsatz von Kreiselpumpen, die häufig zum Entleeren eines Tanks benutzt werden, hervorgerufen.

Hierbei induziert die Drehung des Laufrads der Kreiselpumpe einen Drehimpuls in die Flüssigkeit, der sich bis zurück in den Tank ausbreitet.

Durch den Wirbel am Tankauslauf wird das Gas, meist Luft, CO₂ oder Stickstoff, das sich im Tank oberhalb der Flüssigkeit befindet, in die Flüssigkeit eingezogen und mit ihr vermischt. Viele Flüssigkeiten, vor allem in der Lebensmittelindustrie, reagieren allerdings empfindlich auf den in der eingezogenen Luft enthaltenen Sauerstoff, so dass eine Vermischung von Gas und Flüssigkeit aus Gründen der Produktqualität vermieden werden sollte.

Daneben vermindert in den Tankauslauf eingezogenes Gas den Flüssigkeitsdurchsatz. Entsprechend ist es vorteilhaft eine Wirbelbildung beim Entleeren eines Tanks zu verhindern.

Die Druckschrift US 4,394,966 beschreibt eine Anti-Wirbel-Vorrichtung an der Bodenwand eines Vorratstanks, die über dessen Abflussöffnung angeordnet ist. Durch diese Vorrichtung, wird die abfließende Flüssigkeit dazu gezwungen, eine im Wesentlichen 90-Grad-Knick-Bewegung zu machen, die einen Wirbel verhindern soll.

Die Druckschrift US 5,382,003 zeigt eine Vorrichtung zur Flusskontrolle und zur Begrenzung der Entstehung von Wirbeln, die beim Entleeren von Tanks, insbesondere bei flüssigem Stahl, auftreten. Die Vorrichtung ist über dem Ausguss befestigt oder einteilig mit dem Ausguss ausgeformt und teilt den Flüssigkeitsstrom in vier Teilströme, die die Ausbildung eines Wirbels verhindern sollen.

Die Druckschrift US 6,014,987 zeigt eine Anti-Wirbel Anordnung in einem Treibstofftank bei einem Antrieb für Raumfahrzeuge, die am Tank im Bereich des Tankauslaufs angeschraubt ist.

Die Druckschrift US 2003/0056838 zeigt eine weitere Vorrichtung zum Verhindern von Wirbeln in einem Treibstofftank. Die Anordnung umfasst im Wesentlichen eine größere horizontale Platte, sowie mehrere kleinere vertikale Platten, die jeweils mit Löchern versehen sind, und über dem Abfluss des Tanks angeordnet sind. Mit Hilfe von Befestigungselementen ist die Anordnung am Boden des Tanks befestigt.

Die Druckschrift US 2013/206263 A1 offenbart eine Vorrichtung zum Verhindern von Wirbeln in einem Tankauslauf und einem daran angeschlossenen Rohr. Die Vorrichtung umfasst einen Körper, der sich längs entlang einer zentralen Achse erstreckt und der eine Mehrzahl von primären und sekundären Finnen aufweist, die sich radial von der zentralen Achse erstrecken. Die Vorrichtung umfasst weiterhin einen Flansch, der mit dem Körper verbunden ist, und der sich radial von der zentralen Achse aus erstreckt. Die Vorrichtung wird am Tank befestigt, indem der Flansch zwischen einem Auslassflansch des Tanks und einem Rohrflansch eingeklemmt und befestigt wird.

Ein Grunderfordernis für Tanks in der Lebensmittelindustrie ist die Möglichkeit einer vollständigen und hygienischen Reinigung aller Elemente, die mit der Flüssigkeit in Berührung kommen. Daher dürfen, in dem für die Flüssigkeit zugänglichen Bereich, keine sogenannten Totstellen auftreten, also Bereiche an denen sich kleine Rückstände der Flüssigkeit oder Feststoffe ansammeln können, wo sie von der Reinigung nicht erfasst werden. Dies gilt besonders an Stellen, an denen sich Teile lose berühren, sich also kleinste Zwischenräume bilden, die nicht gereinigt werden können. Auch Gewinde, die nicht entsprechend abgedichtet sind, gehören dazu.

Es ist daher die Aufgabe der vorliegenden Erfindung, einen Tankauslauf mit einem Wirbelbrecher bereitzustellen, der die oben genannten Problem überwindet, einfach herzustellen ist und mit wenigen Schritten ein- und auch wieder ausgebaut werden kann, ohne dass dabei strukturelle Veränderungen am Tank vorgenommen werden müssen. Zusätzlich sollte der Wirbelbrecher vollständig hygienisch zu reinigen sein, vorzugsweise direkt im eingebauten Zustand, damit er für Tanks in der Lebensmittelindustrie verwendet werden kann.

### 3. Zusammenfassung der Erfindung

Die oben genannten Probleme werden erfindungsgemäß durch einen Tankauslauf mit Wirbelbrecher gemäß Anspruch 1 und einem Verfahren zur Montage eines Wirbelbrechers am Tankauslauf eines Tanks gemäß Anspruch 13 gelöst.

Insbesondere werden die oben genannten Probleme gelöst durch einen Tankauslauf eines Tanks aufweisend einen Rohranschlusskörper, mit einem Einlaufbereich, der an einem Auslaufbereich eines Tanks befestigbar ist, einen Wirbelbrecher, der ausschließlich an dem Rohranschlusskörper befestigt ist, wobei der Wirbelbrecher sich durch den Einlaufbereich hindurch in den Tank hinein erstreckt und dabei den Tank nicht berührt.

Der Auslaufbereich ist bereits am druckgeprüften Tank. Über den Auslaufbereich erfolgt eine einfache und sichere Verbindung des Tanks mit dem Rohranschlusskörper. Ein solcher Rohranschlusskörper kann zum Beispiel ein kommerziell erhältliches VARIVENT^{®}-Eckgehäuse sein, das einen entsprechenden Einlaufbereich aufweist. Vorzugsweise werden der Ein- und Auslaufbereich aneinandergeschraubt, so dass keine strukturellen Veränderungen am Tank notwendig sind. Eine solche Verbindung ist zudem lösbar, und bis auf die Befestigungsmittel für die Verbindung sind keine zusätzlichen Befestigungsmittel am Tank notwendig.

Der erfindungsgemäße Wirbelbrecher erstreckt sich durch den Einlaufbereich des Rohranschlusskörpers hindurch und in den Tank hinein, wodurch Wirbel sowohl im Tank als auch in der Einlauföffnung des Einlaufbereichs verhindert werden. Weiterhin berührt der Wirbelbrecher den Tank nicht, so dass keine Totstellen entstehen und der Wirbelbrecher komplett und hygienisch gereinigt werden kann.

Durch die Befestigung des Wirbelbrechers ausschließlich am Rohranschlusskörper werden keinerlei Veränderungen am Tank selbst durchgeführt. Somit ist keine neue Druckprüfung oder ähnliches erforderlich. Zudem kann der Wirbelbrecher einfach und kostengünstig am Tank nachgerüstet und auch wieder entfernt werden, ohne dass am Tank selbst irgendwelche Veränderungen erforderlich sind. Der erfindungsgemäße Wirbelbrecher eignet sich somit zur Nachrüstung aller Tanks, insbesondere Flüssigkeitstanks in der Lebensmittelindustrie, die am Tankauslauf einen Auslaufbereich aufweisen.

Bevorzugt berührt der Wirbelbrecher zudem eine Wand einer Auslauföffnung im Auslaufbereich des Tanks nicht. Dadurch werden auch zwischen diesen beiden Elementen Totstellen verhindert, in denen sich Ablagerungen bilden können, die dann zu Verunreinigungen führen und die schlecht oder gar nicht zu reinigen sind. Zudem wird vermieden, dass durch einen direkten Kontakt zwischen Wirbelbrecher und Einlaufbereich Beschädigungen oder Korrosion an den Oberflächen auftreten. Durch die Kontaktlosigkeit hat der Wirbelbrecher keinen Einfluss auf die Verbindung oder den Tank selbst.

Bevorzugt berührt der Wirbelbrecher zudem eine Wand einer Einlauföffnung im Einlaufbereich des Rohranschlusskörpers nicht. Die Vorteile der vollständigen Reinigbarkeit, Korrosionsbeständigkeit und einfachen Nachrüstung gelten auch für die berührungslose Anordnung von Wirbelbrecher zum Einlaufbereich des Rohranschlusskörpers.

Erfindungsgemäß weist der Wirbelbrecher einen Fußbereich auf, der am Rohranschlusskörper befestigt ist; und weist einen Kopfbereich auf, der vom Fußbereich im Innern des Tanks gehalten wird. Der Wirbelbrecher ist nur an dem Rohranschlusskörper befestigt, wodurch eine schnelle Montage mit wenigen Befestigungsmitteln oder Materialien durchgeführt werden kann. Die Befestigung ist weiterhin vom Tank unabhängig, so dass beim Einbau des erfindungsgemäßen Tankauslaufs nur die vorhandene Verbindung zwischen Tank und Rohranschluss verwendet wird. Damit werden keinerlei strukturellen Veränderungen am Tank selbst vorgenommen, die eine erneute Druckprüfung erfordern würden.

Bevorzugt unterteilt der Fußbereich des Wirbelbrechers die Einlauföffnung in mindestens zwei, weiter bevorzugt drei oder bevorzugt vier, Querschnitte. Damit trägt auch der Fußbereich des Wirbelbrechers zu einer Verhinderung eines Wirbels bei, indem der Flüssigkeitsfluss in mehrere Teilströme aufgeteilt wird. Sofern jeder Teilstrom zur Wirbelbildung beitragen sollte, löschen sich diese Teil-Wirbel gegenseitig aus.

Bevorzugt weist der Wirbelbrecher durchgängig geschlossene Oberflächen auf. Eine durchgängig geschlossene Oberfläche ist beispielsweise eine Oberfläche ohne Löcher, Aussparungen oder dergleichen. Durch die geschlossenen Oberflächen des Wirbelbrechers kann die Flüssigkeit in einer laminaren Strömung an dem Wirbelbrecher entlangströmen und verwirbelt nicht. Bei einer durchlöcherten Oberfläche hingegen treten Querströmungen durch die Löcher auf und erzeugen kleinere Verwirbelungen. Diese Verwirbelungen können wieder zu einer ungewollten Durch- bzw. Entmischung von Gas und Flüssigkeit führen, und werden durch die durchgängig geschlossene Oberfläche vermieden. Weiterhin ist eine durchgängig geschlossene Oberfläche leichter zu reinigen und vermeidet Totstellen, in denen sich etwaige Rückstände anlagern können.

Erfindungsgemäß weist der Kopfbereich des Wirbelbrechers mindestens eine, in der horizontalen Ebene gemessene Abmessung auf, die größer ist, als der Durchmesser der Einlauföffnung. Je größer der Kopfbereich ist, desto besser verhindert er die Wirbelbildung im Tank. Bevorzugt beträgt die Abmessung des Kopfbereichs mindestens das 3,5-fache des Durchmessers der Einlauföffnung. Bevorzugt beträgt die Abmessung des Kopfbereichs das 1,5 - 5-fache des Durchmessers der Einlauföffnung. Noch bevorzugter beträgt die Abmessung des Kopfbereichs das 3 - 4-fache des Durchmessers der Einlauföffnung. Und noch bevorzugter beträgt die Abmessung des Kopfbereichs das 3,5 - 3,9-fache des Durchmessers der Einlauföffnung. Darüber hinaus sind auch Abmessungen möglich, die deutlich größer als das 5-fache des Durchmessers der Einlauföffnung betragen.

Bevorzugt weist der Fußbereich des Wirbelbrechers eine in der horizontalen Ebene gemessene maximale Abmessung auf, die kleiner ist, als der Durchmesser der Einlauföffnung. Dadurch, dass der Fußbereich schmaler ist, als der Durchmesser der Einlauföffnung stehen der Fußbereich und die Wand der Ein- und Auslauföffnung nicht in direktem Kontakt miteinander. Durch diese kontaktlose Anordnung werden Beschädigungen und Kontaktkorrosion an den Oberflächen der beiden Elemente vermieden. Weiterhin entstehen keine nicht zu reinigende Totstellen zwischen dem Fußbereich und der Wand der Ein- und Auslauföffnung.

Der Fußbereich teilt den Durchflussbereich im Inneren des Ein- und Auslaufbereichs in mindestens zwei im Wesentlichen voneinander getrennte Bereiche. Bevorzugt beträgt die maximale Abmessung des Fußbereichs das 0,5 - 0,95-fache des Durchmessers der Einlauföffnung. Noch bevorzugter beträgt die maximale Abmessung des Fußbereichs das 0,8 - 0,9 fache des Durchmessers der Einlauföffnung. Und noch bevorzugter beträgt die maximale Abmessung des Fußbereichs das 0,85 - 0,87 fache des Durchmessers der Einlauföffnung. In einer bevorzugten Ausführungsform beträgt der Abstand zwischen der maximalen Abmessung des Fußbereichs und dem Durchmesser der Einlauföffnung 8mm.

Bevorzugt weist der Fußbereich des Wirbelbrechers vertikal angeordnete, im Wesentlichen ebene Elemente mit einer glatten Oberfläche auf. Da sich der Fußbereich durch den gesamten Durchflussbereich durch den Ein- und Auslaufbereich erstreckt, treten dort keine Wirbel auf. Die glatte Oberfläche ist zudem leicht und hygienisch zu reinigen, da sich Ablagerungen nicht dauerhaft festsetzen können.

Bevorzugt weist der Kopfbereich des Wirbelbrechers vertikal angeordnete, im Wesentlichen ebene Elemente mit einer glatten Oberfläche auf. Die glatte Oberfläche bieten dieselben Vorteile der laminaren Strömung und hygienischen Reinigung wie bereits beim Fußbereich des Wirbelbrechers beschrieben. Die vertikale Anordnung der Elemente ermöglicht weiterhin ein direktes Abfließen der Flüssigkeit von oben, d.h. in vertikaler Richtung, in den Rohranschlusskörper hinein.

Bevorzugt ist der Fußbereich mittels einer Verschraubung lösbar an dem Rohranschlusskörper befestigt. Durch die Verschraubung ergibt sich eine einfache und sichere Art der Befestigung. Der Wirbelbrecher kann dadurch zudem problemlos eingesetzt, ausgetauscht oder entfernt werden. Der Wirbelbrecher muss nur über den Tank durch den Auslaufbereich und den Einlaufbereich hindurchgesteckt werden und kann dann von einem leicht zugänglichen Punkt außerhalb des Tanks verschraubt werden.

Bevorzugt weist der Fußbereich weiterhin eine kegelförmige Basis auf. Durch die Kegelform werden längere Befestigungskanten zwischen dem Fußbereich und der Basis ausgebildet an denen der Fußbereich mit der Basis bevorzugt verschweißt ist. Durch die Kegelform der Basis werden weiterhin spitze Ecken zwischen dem Fußbereich und der Basis, welche Totstellen bilden können, vermieden. Die große kreisförmige Bodenfläche des Kegels bietet einen großen Durchmesser für die Verschraubung und damit eine sichere Befestigung des Wirbelbrechers am Rohranschlusskörper.

Bevorzugt weist der Rohranschlusskörper weiterhin einen dem Einlaufbereich gegenüberliegenden und zu öffnenden Deckel auf, an dem der Wirbelbrecher befestigt ist. Die Montage des Wirbelbrechers ist einfach, da dieser nur durch die Auslauföffnung und die Einlauföffnung hindurchgesteckt wird und dann am gegenüberliegenden Deckel des Rohranschlusskörpers befestigt wird. Ein Einbau des Wirbelbrechers in ein bestehendes System ist weiterhin vereinfacht, dadurch, dass nur der Deckel modifiziert werden muss, um den Wirbelbrecher daran befestigen zu können. Es müssen keine Veränderungen am Tank selbst vorgenommen werden. Eine Modifizierung des Deckels ist zudem weitaus kostengünstiger, als eine Veränderung am Tank. Durch einen Austausch des zu öffnenden Deckels ist ein Einsetzen bzw. Entfernen des Wirbelbrechers problemlos möglich. Falls eine Verstopfung im Tankabfluss auftritt, kann diese durch einen Zugang über den zu öffnenden Deckel beseitigt werden.

Bevorzugt weist die Verschraubung eine Dichtung auf, die die Verschraubung außerhalb des Flüssigkeitsbereichs zum Hohlraum des Rohranschlusskörpers hin abdichtet, wobei die Dichtung an den jeweiligen Kanten zwischen einem Deckel und einer Basis des Fußbereichs sowie dem Deckel und dem Rohranschlusskörper angeordnet ist, und eine konvex geformte Oberfläche zum Inneren des Rohranschlusskörpers bildet. Durch diese spezielle Anordnung der Dichtung an den Kanten und dem Ausbilden der konvexen Oberfläche zum Inneren des Hohlraums des Rohranschlusskörpers kann die Dichtung einfach und hygienisch gereinigt werden. Die Verschraubung kommt dabei nicht in Kontakt mit dem Tankinhalt.

Die oben genannten Probleme werden auch gelöst durch ein Verfahren zur Montage eines Wirbelbrechers am Tankauslauf eines Tanks, aufweisend die folgenden Schritte:
a.) Befestigen eines Rohranschlusskörpers, mit einem Einlaufbereich, an einem Auslaufbereich eines Tanks;
b.) Durchstecken eines Wirbelbrechers vom Inneren des Tanks durch den Auslaufbereich des Tanks und den Einlaufbereich des Rohranschlusskörpers hindurch in den Rohranschlusskörper hinein; und
c.) Befestigen des Wirbelbrechers ausschließlich an dem Rohranschlusskörper, so dass sich der Wirbelbrecher durch den Einlaufbereich des Rohranschlusskörpers hindurch in den Tank hinein erstreckt und dabei den Tank nicht berührt.

Die Befestigung eines Rohranschlusskörpers an einen Tank mit Hilfe eines Einlaufbereichs erlaubt eine druckfeste Verbindung und eine direkte Montage an einen vorhandenen Auslaufbereich eines Tanks. Die Verbindung zwischen dem Tank und dem Rohranschlusskörper ist einfach, kostengünstig und ohne zusätzlichen Aufwand durchführbar. Das Durchstecken eines Wirbelbrechers durch die Auslauföffnung im Auslaufbereich des Tanks und die Einlauföffnung im Einlaufbereich des Rohranschlusskörpers vom Innern des Tanks ermöglicht die Verwendung von Wirbelbrechern mit großen Abmessungen. Durch das Befestigen des Wirbelbrechers ausschließlich an dem Rohranschlusskörper, so dass sich der Wirbelbrecher durch den Einlaufbereich hindurch in den Tank hinein erstreckt und dabei den Tank nicht berührt, ist eine hygienische und gut reinigbare Anordnung des Wirbelbrechers möglich. Mit dem beschriebenen Verfahren ist eine einfache Montage eines Wirbelbrechers in einen bestehenden Tankauslauf möglich. Weiterhin wird durch das beschriebene Einsetzen des Wirbelbrechers die Wirbelbildung in einem großen Bereich sowohl im Auslauf selbst, als auch im Tank davor verhindert, und eine hygienische Reinigung des Tankauslaufs, auch mit eingebautem Wirbelbrecher, gewährleistet.

### 4. Kurze Beschreibung der Figuren

Im Folgenden werden bevorzugte Ausführungsformen der vorliegenden Erfindung anhand der beigefügten Figuren dargestellt. Dabei zeigt:
- Fig. 1: eine dreidimensionale Darstellung einer Ausführungsform eines erfindungsgemäßen Tankauslaufs mit Wirbelbrecher;
- Fig. 2: eine dreidimensionale Darstellung eines Tanks mit Tankauslauf gemäß Fig. 1;
- Fig. 3: eine dreidimensionale Darstellung einer weiteren Ausführungsform des erfindungsgemäßen Tankauslaufs mit Wirbelbrecher;
- Fig. 4: eine dreidimensionale Explosionsdarstellung des Wirbelbrechers der Fig. 3;
- Fig. 5: eine vertikale Querschnittsansicht des Tankauslaufs mit Wirbelbrecher;
- Fig. 6: bevorzugte Querschnittsformen des Fußbereichs des Wirbelbrechers; und
- Fig. 7: bevorzugte Querschnittsformen des Kopfbereichs des Wirbelbrechers.

### 5. Detaillierte Beschreibung bevorzugter Ausführungsformen

Im Folgenden werden bevorzugte Ausführungsformen der vorliegenden Erfindung mit Bezug auf die beigefügten Figuren im Detail beschrieben.

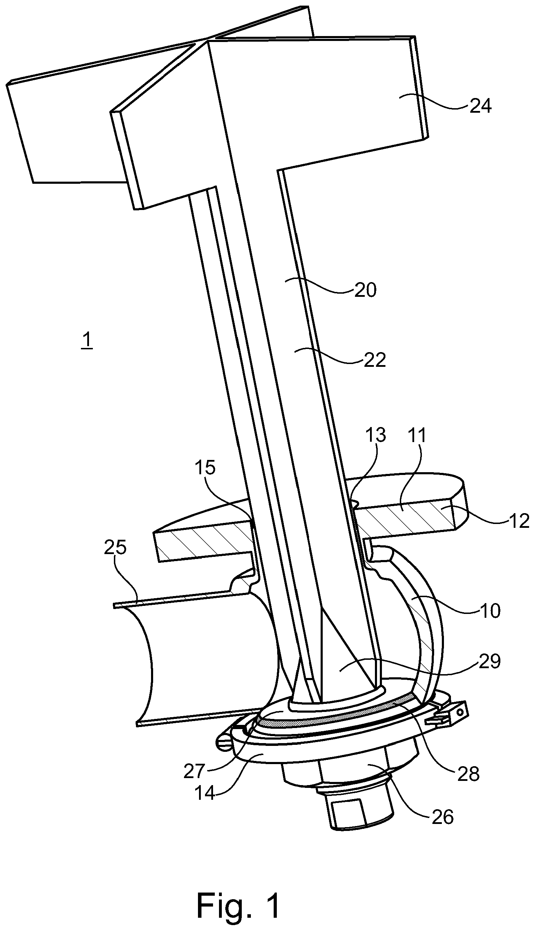

Die Fig. 1 zeigt eine erste Ausführungsform des erfindungsgemäßen Tankauslaufs 1 mit Wirbelbrecher 20. Der Wirbelbrecher 20 besteht dabei im Wesentlichen aus einem Kopfbereich 24, der sich im Innern des Tanks befindet und einem Fußbereich 22, mit dem der Wirbelbrecher 20 ausschließlich befestigt ist. In der dargestellten Ausführungsform ist der Wirbelbrecher 20 einteilig ausgestaltet. Der Wirbelbrecher 20 kann aber auch aus zwei oder mehr Teilen zusammengesetzt sein, die Kopfbereich 24 und Fußbereich 22 bilden. Das Material des Wirbelbrechers 20 ist vorzugsweise ein harter Kunststoff oder ein Metall, um den auftretenden Strömungskräften zu widerstehen.

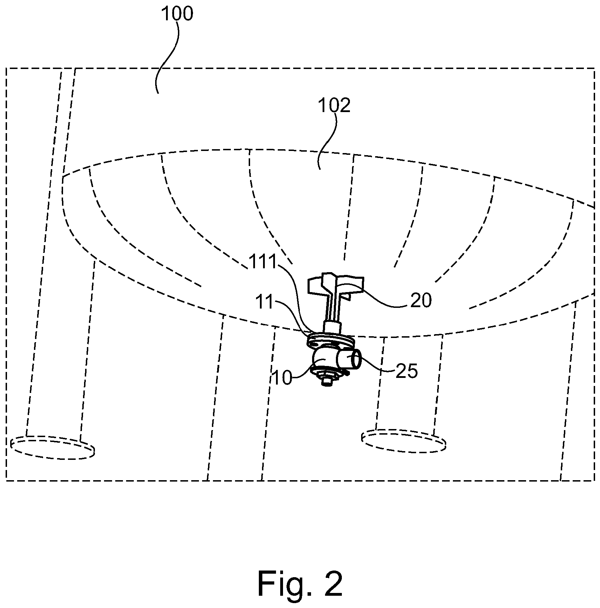

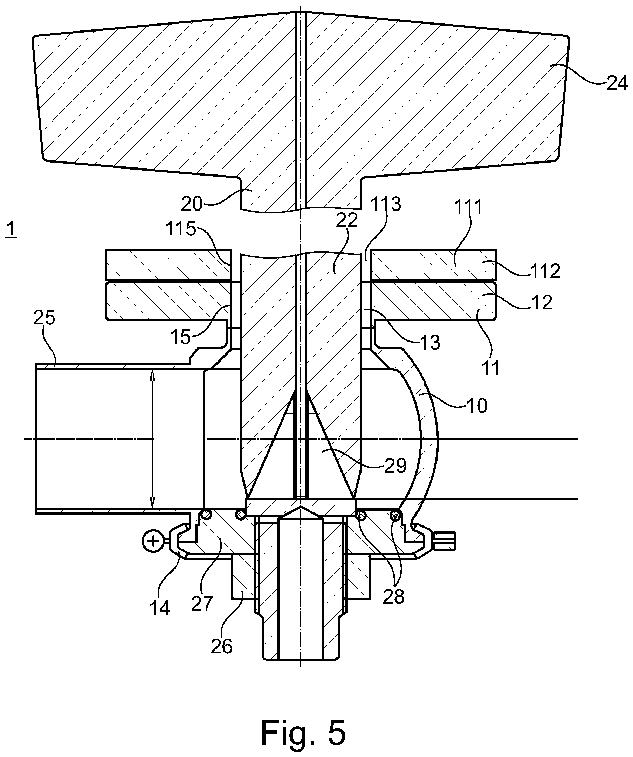

Der Fußbereich 22 des Wirbelbrechers 20 teilt die Einlauföffnung 13 im Wesentlichen in vier gleichgroße Bereiche, durch die der Tankinhalt vom Kopfbereich 24 her in Richtung des Hohlraums des Rohranschlusskörpers 10 strömen kann. Die gleiche Aufteilung erfolgt in der Auslauföffnung 113 des sich dem Einlaufbereich 11 anschließenden Auslaufbereichs 111, wie in den Fig. 2 und Fig. 5 ersichtlich. Der Tankinhalt kann auch zwischen den schmalen Stirnseiten der vertikalen Elemente des Fußbereichs 22 und der beabstandeten Innenwand des Einlaufbereichs 11 und des Auslaufbereichs 111 hindurchströmen, und so eine Ablagerung von Flüssigkeitsrückständen verhindern. Daher kann der Wirbelbrecher 20 auch von allen Seiten gereinigt werden. Dadurch, dass der Durchflussquerschnitt der Einlauföffnung 13 und der Auslauföffnung 113 in separate Bereiche unterteilt ist, kann sich keine horizontale Rotationsbewegung der Flüssigkeit um die vertikale Mittelachse des Durchflussquerschnitts bilden. Somit können auch keine Wirbel entstehen bzw. von der Kreiselpumpe weiter in den Tank geleitet werden.

Der Einlaufbereich 11 des Rohranschlusskörpers 10 ist an dem Auslaufbereich 111 des Tanks 100 mit Hilfe von Befestigungsmitteln 12, 112 befestigt. In der in den Figuren 1 - 3 und Fig. 5 dargestellten Ausführungsform sind die Befestigungsmittel Flansche, die eine Flanschverbindung mit axialer Verschraubung bilden und miteinander verschraubt werden, um eine druckdichte Verbindung zwischen dem Einlaufbereich 11 und dem Auslaufbereich 111 bereitzustellen. In anderen Ausführungsformen kann die Befestigung auch mit Hilfe einer Milchrohrverschraubung, z.B. nach DIN 11853, oder einer Klemmverbindung, d.h. einer Flanschverbindung mit einer Spannklammer, z.B. Tri-clamp, oder ähnlichen Verbindungen, bereitgestellt werden. In den gerade beschriebenen Ausführungsformen sind der Ein- und Auslaufbereich lösbar miteinander verbunden. Darüber hinaus sind in anderen Ausführungsformen auch miteinander verschweißte Flansche möglich.

Der Fußbereich 22 ist mit einer Basis 29 fest und flüssigkeitsdicht verbunden. Die Basis 29 weist bevorzugt eine Kegelform auf, wobei die kreisförmige Bodenfläche des Kegels ein Gewinde zur Verschraubung Wirbelbrechers 20 in einem Deckel 27 bereitstellt. Die langen Befestigungskanten zwischen dem Fußbereich 22 und der Basis 29 ermöglichen eine stabile mechanische Verbindung, die zum Beispiel geschweißt oder geklebt oder durch andere Befestigungsmittel hergestellt sein kann. In anderen Ausführungsformen kann die Basis auch andere Geometrien aufweisen, wie z.B. eine Pyramidenform. Die dargestellte Basis bildet Kanten mit Winkeln die gleich oder größer als 90 Grad sind, so dass sich mögliche Ablagerungen leicht reinigen, z.B. abspülen, lassen und nicht anhaften. Ecken und Kanten mit Winkel von weniger als 90 Grad bilden schwer zu reinigende Stellen, und sollten besonders aus hygienischen Gründen vermieden werden. Das Material der Basis kann das gleiche Material wie das der anderen Teile des Wirbelbrechers sein, oder auch ein anderes sein. Die Basis kann auch zusammen einteilig mit den anderen Teilen, zum Beispiel in einem Spritzgussverfahren, hergestellt sein.

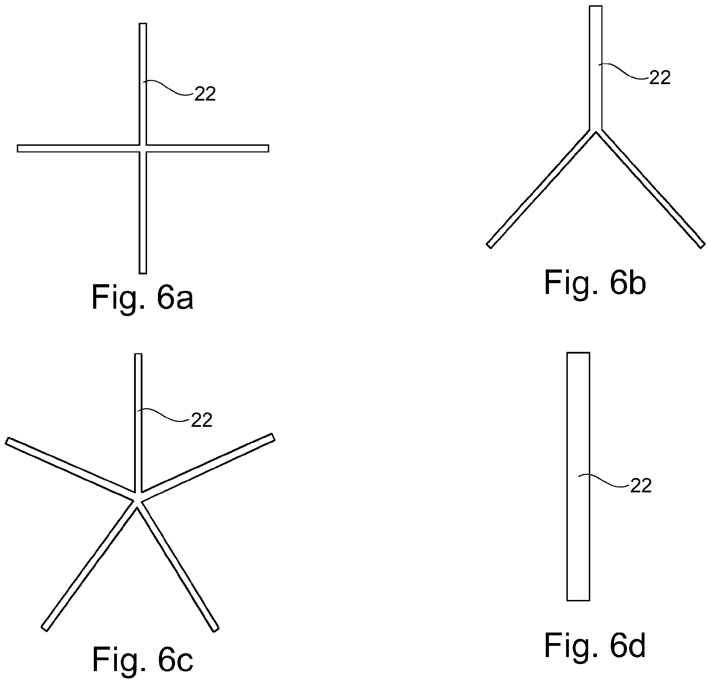

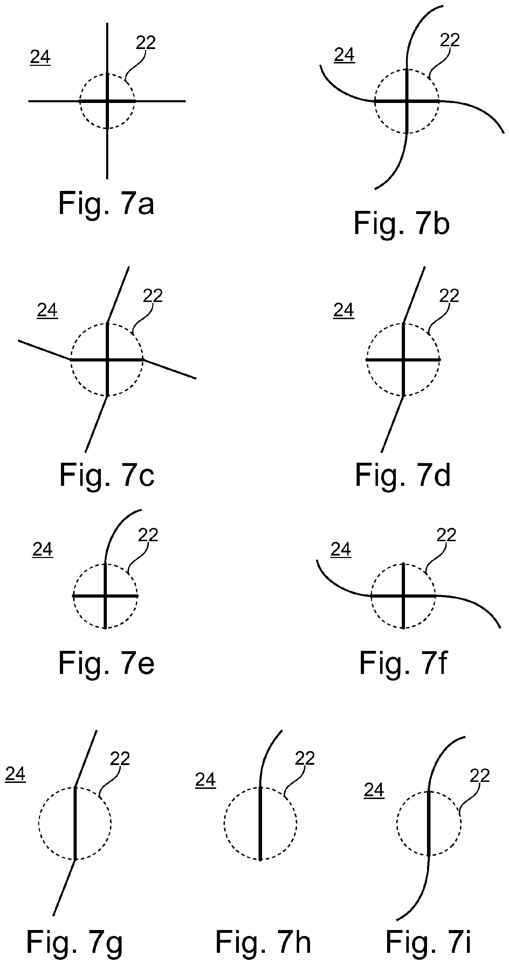

In einer bevorzugten Ausführungsform kann der Fußbereich 22 aus einem Stück mit dem Kopfbereich 24 geformt sein, zum Beispiel in einem Spritzgussverfahren oder durch ein Verschweißen von Blechteilen. Der Fußbereich 22 kann in einer anderen Ausführungsform auch lösbar mit dem Kopfbereich 24 verbunden sein. Durch eine lösbare Verbindung ist ein Austausch von Teilen des Wirbelbrechers möglich. Zusätzlich können der Fußbereich 22 und der Kopfbereich 24 unterschiedliche Geometrien in einem horizontalen Querschnitt aufweisen. Die Querschnitte sind dabei aber immer so geformt, dass sie eine Rotationsbewegung des Tankinhalts um die vertikale Mittelachse des Tankauslaufs 1 verhindern. Bevorzugte Querschnitte des Fußbereichs 22 sind in Fig. 6 dargestellt. Bevorzugte Querschnitte des Kopfbereichs 24 sind zusammen mit den innen dargestellten Projektionsflächen des Fußbereichs 22 in Fig. 7 dargestellt.

Für die Querschnitte des Kopfbereichs 24 in einer horizontalen Ebene ist eine Vielzahl von Geometrien möglich, bei der im Wesentlichen eine Rotationsbewegung der Flüssigkeit um die vertikale Mittelachse der Auslauföffnung verhindert wird. Bevorzugte Geometrien sind dabei ein kreuzförmiger Querschnitt (Fig. 6a), ein sternförmiger Querschnitt mit drei Armen im 120 Grad Winkel ausgehend vom Mittelpunkt (Fig. 6b), eine S-Form, ein sternförmiger Querschnitt mit fünf Armen im Winkel von 72 Grad ausgehend vom Mittelpunkt (Fig. 6c) oder ein gerader bzw. linienförmiger Querschnitt (Fig. 6d) für den Fußbereich 22. Bevorzugte Querschnitte für den Kopfbereich 24 sind ein kreuzförmiger Querschnitt (Fig. 7a), gekreuzte-S-förmige Querschnitte (Figuren 7b, 7c), halbseitige-S-förmige Querschnitte (Figuren 7e, 7h) oder S-förmige Querschnitte (Figuren 7d, 7f, 7g, 7i).

Die schmalen verbleibenden Zwischenräume zwischen dem Rand des Fußbereichs 22 des Wirbelbrechers 20 und den inneren Wänden 15, 115 der Ein- und Auslaufbereiche 11, 111 sind im Hinblick auf eine Verhinderung von Wirbeln strömungstechnisch vernachlässigbar. Jedoch sind sie entscheidend dafür, dass der Wirbelbrecher vollständig gereinigt werden kann und sich keine Toträume bilden.

Der Hohlraum des Rohranschlusskörpers 10 ist mit Hilfe von zwei Dichtungen 28 flüssigkeitsdicht von der Verschraubung 26 getrennt. Jede Dichtung 28 besteht vorzugsweise aus gewöhnlichen Dichtungsringen aus Kunststoff oder einem ähnlichen Material. Solche Dichtungsringe sind kostengünstig und leicht austauschbar. Werden die Dichtungsringe zwischen dem Deckel 27 und der Basis 29 sowie zwischen dem Deckel 27 und dem Rohranschlusskörper 10 eingeklemmt, so dehnen sie sich in einer Richtung, zu einer konvexen Wölbung zum Inneren des Rohranschlusskörpers aus. Eine solche konvexe Oberflächenwölbung ist ebenfalls leicht zu reinigen, da die Winkel an den Kanten mehr als 90 Grad betragen.

Der Wirbelbrecher 20 ist mit Hilfe einer Verschraubung 26 mit dem Rohranschlusskörper 10, insbesondere dessen Deckel 27 verbunden. Im eingebauten Zustand ist der Wirbelbrecher 20 nicht mehr drehbar, um einer Wirbelbildung entgegenzuwirken. Die Verschraubung 26 ist außerhalb des Rohranschlusskörpers 10 angebracht. Daher ist sie zu einem leicht zugänglich, was vorteilhaft bei der Montage ist. Zum anderen kommt auf diese Art und Weise die Verschraubung 26 nicht in Kontakt mit der Flüssigkeit, was vorteilhaft für eine hygienische Reinigung ist. Der Wirbelbrecher 20 kann auch durch andere Befestigungsarten an dem Rohranschlusskörper 10 befestigt werden, z.B. durch Klemmen, Schweißen, Kleben, etc. wobei dann jedoch die Vorteile der Verschraubung nicht gegeben sind.

In der dargestellten Ausführungsform ist der Wirbelbrecher 20 an einem zu öffnenden Deckel 27 befestigt. Der Deckel 27 kann einfach geöffnet und ausgetauscht werden und durch einen geschlossenen Deckel 27 ersetzt werden, wenn der Wirbelbrecher 20 demontiert werden sollte. Der Deckel 27 ist mit einem Befestigungsmittel 14 am Rohranschlusskörper 10 befestigt. Bei der in den Figuren 1-3 und Fig. 5 dargestellten Ausführungsform ist das Befestigungsmittel 14 eine Klammer. Der Deckel 27 kann aber auch mit Hilfe von anderen Befestigungsarten mit dem Rohranschluss verbunden sein, z.B. an diesen angeschraubt sein.

Der Deckel 27 weist zum Einbau des Wirbelbrechers 20 bevorzugt zumindest eine Öffnung auf, durch welche ein Befestigungsmittel, wie z.B. die Basis 29, hindurchgeführt werden kann.

Die Fig. 2 zeigt einen Teil eines Tanks 100 mit angebautem Tankanschluss 1 mit Wirbelbrecher 20. Der Tank 100 kann beispielsweise ein Tank für Flüssigkeiten, Suspensionen oder andere Fluide, insbesondere für flüssige Lebensmittel sein. Der Auslauf des Tanks 100 befindet sich vorteilhafterweise an der Unterseite des Tanks 100 am Tankboden 102, um den Tank 100 mit Hilfe der Schwerkraft restlos zu entleeren. Zusätzlich kann eine Pumpe, insbesondere eine Kreiselpumpe (nicht gezeigt), eingesetzt werden, um den Tank 100 zu entleeren. Durch die Pumpe beschleunigt sich der Entleerungsvorgang, aber durch die Pumpe können auch Wirbel in den Tankinhalt induziert werden. Diese induzierten Wirbel breiten sich dann über die Auslaufleitung 25 zurück in den Tank 100 aus. Die Wirbelbildung soll in beide Richtungen um den Tankauslauf 1 herum verhindert werden.

Um die Wirbelausbreitung von der Pumpe in Richtung des Tanks 100 zu verhindern befindet sich der Fußbereich 22, im Durchlaufbereich der Ein- und Auslauföffnungen 13, 113. Auf der anderen Seite der Tankauslauföffnung befindet sich der Kopfbereich 24 des Wirbelbrechers über der Öffnung des Tankauslaufs 1 innerhalb des Tanks, um eine Wirbelbildung innerhalb des Tanks in der Nähe des Auslaufs zu verhindern. Die Höhe des Wirbelbrechers 20 ist dabei an die Geometrie des Tankauslaufs 1 angepasst. Bevorzugt ist der Wirbelbrecher 20 mit einem kleinen Abstand über der Öffnung des Tankauslaufs 1 angeordnet und berührt den Tank 100 nicht. Bevorzugt beträgt der Abstand zwischen der Unterkante des Kopfbereichs 24 und der Oberkante des Tankbodens 102 weniger als 5 cm, noch bevorzugter weniger als 3 cm.

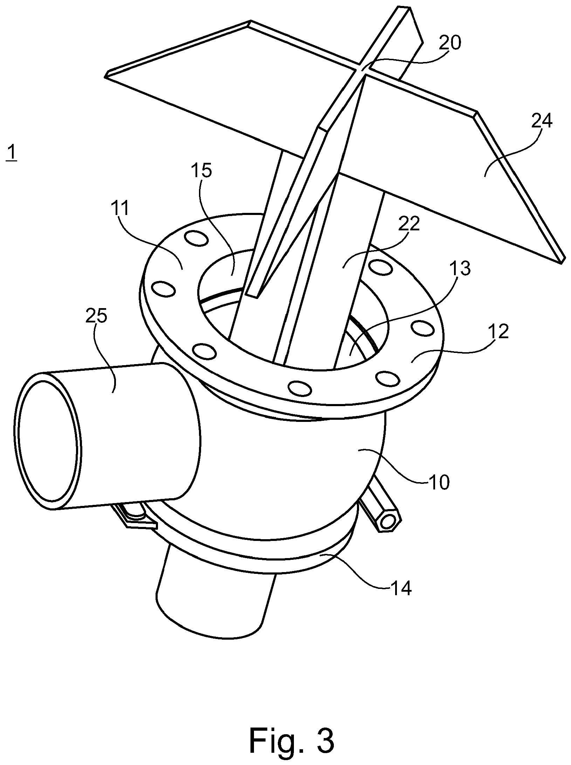

Fig. 3 zeigt eine weitere Ausführungsform des Tanklauslaufs 1 mit Wirbelbrecher 20. Bei dieser Ausführungsform sind die Ecken des Kopfbereichs 24 des Wirbelbrechers 20 abgeschrägt. Eine solche Abschrägung erzeugt andere Strömungseigenschaften der Flüssigkeit bei der Entleerung des Tanks 100. Dadurch, dass der Wirbelbrecher 20 lösbar befestigt ist, ist es auch möglich verschiedene Ausführungsformen des Wirbelbrechers 20 gegeneinander einfach auszutauschen.

Zum Beispiel kann die Größe der vertikalen Elemente des Wirbelbrechers 20 variiert werden, je nachdem welche Flüssigkeiten, mit einer bestimmten, unterschiedlichen Dichte, im Tank 100 gelagert sind. Bei Stoffen mit einer höheren Dichte bzw. Viskosität, könnte unter Umständen eine kleinere Größe oder eine andere Form der vertikalen Elemente von Vorteil sein, verglichen mit Stoffen einer geringeren Dichte bzw. Viskosität. Auch kann der Abstand zwischen den Stirnseiten der vertikalen Elemente des Fußbereichs 22 und der Innenwände der Ein- und Auslaufbereiche 11, 111 variiert bzw. angepasst werden. Bei Stoffen mit einer höheren Viskosität könnte ein größerer Abstand vorteilhaft sein, als bei Stoffen mit einer geringeren Viskosität. Wenn die Haftungs- und Reibungsfläche an dem Wirbelbrecher 20 für einen Stoff mit einer höheren Viskosität geringer ist, kann der Stoff schneller abfließen und der Tank 100 schneller entleert werden, wobei dennoch die Wirbelbildung verhindert wird.

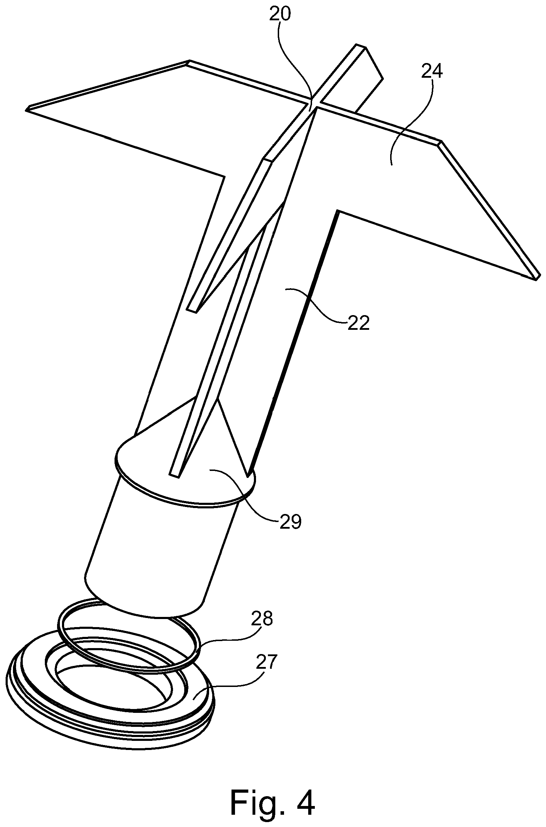

Fig. 4 zeigt eine Explosionsansicht des Wirbelbrechers 20 in der weiteren Ausführungsform. Deutlich sichtbar ist in dieser Ansicht der Deckel 27 mit der zentralen Befestigungsöffnung für die Aufnahme der Basis 29. Bei der Montage des Wirbelbrechers 20 wird die Basis 29 des Wirbelbrechers 20 einfach durch die Öffnung in dem Deckel 27 gesteckt, mit der Dichtung 28 abgedichtet und dann von außen mit der Mutter 26 verschraubt. Der Deckel 27 kann in einer anderen Ausführungsform auch ein Gewinde zur Aufnahme der Basis 29 aufweisen. Auch dieses kann aufgrund der Dichtung 28 nicht in Kontakt mit dem Tankinhalt kommen.

Durch verändern der Höhe der Basis 29 oder des Fußbereichs 22 kann die Höhe des Wirbelbrechers 20 an die Geometrie des Tankauslaufs 1 angepasst werden. Die einfachen Geometrien des Wirbelbrechers, wie Kegelstumpf, rechteckige oder trapezförmige Platten etc., ermöglichen eine einfache Herstellung und Reinigung des Wirbelbrechers 20.

Die Schnittansicht der Fig. 5 verdeutlicht die Details der Befestigung des Wirbelbrechers 20 ausschließlich am Rohranschlusskörper 10. Der Auslaufbereich 111 und der Einlaufbereich 11 ist von dem Fußbereich 22 des Wirbelbrechers 20 beabstandet. Wie in Fig. 5 gezeigt, ist der Kopfbereich 24 deutlich breiter als der Durchflussquerschnitt durch die Ein- und Auslauföffnung 13, 113. Dadurch wird in einem größeren Bereich um die Ablauföffnung herum der Tankinhalt beim Aus- oder Einlauf beruhigt und so eine Wirbelbildung verhindert.

Zur Befestigung des Wirbelbrechers 20 genügt eine Befestigung am Deckel 27 des Rohranschlusskörpers 10. Dazu weist der Deckel 27 eine Öffnung auf, durch welche die Basis 29 des Wirbelbrechers 20 hindurchgeführt wird. Wenn der Tankauslauf 1 ohne Wirbelbrecher benutzt werden soll, kann der Deckel 27 durch einen Deckel 27 ohne Öffnung ausgetauscht werden. Die Umrüstung eines bestehenden Tankauslaufs 1 ist somit einfach und reversibel durchführbar.

Über einen gesonderten Tankzugang, zum Beispiel eine Reinigungsöffnung (nicht dargestellt), kann ein Techniker Zugang zum Inneren des Tanks 100 erhalten, und den Wirbelbrecher manuell in die Öffnung des Auslaufbereichs 111 einsetzen.

### Bezugszeichenliste

- 1: Tankauslauf
- 10: Rohranschlusskörper
- 11: Einlaufbereich
- 12: Befestigungsmittel
- 13: Einlauföffnung
- 14: Befestigungsmittel
- 15: Wand
- 20: Wirbelbrecher
- 22: Fußbereich
- 24: Kopfbereich
- 25: Auslaufleitung
- 26: Verschraubung
- 27: Deckel
- 28: Dichtung
- 29: Basis
- 100: Tank
- 102: Tankboden
- 111: Auslaufbereich
- 112: Befestigungsmittel
- 113: Auslauföffnung
- 115: Wand

## Patentansprüche

1. Tankauslauf (1) eines Tanks (100) aufweisend:
a. einen Rohranschlusskörper (10), mit einem Einlaufbereich (11), der an einem Auslaufbereich (111) eines Tanks (100) befestigbar ist;
b. einen Wirbelbrecher (20), der ausschließlich an dem Rohranschlusskörper (10) befestigt ist; wobei
c. der Wirbelbrecher (20) sich durch den Einlaufbereich (11) hindurch in den Tank (100) hinein erstreckt und dabei den Tank (100) nicht berührt;
d. wobei der Wirbelbrecher (20) einen Fußbereich (22) aufweist, der am Rohranschlusskörper (10) befestigt ist und einen Kopfbereich (24) aufweist, der vom Fußbereich (22) im Innern des Tanks (100) gehalten wird; und
e. wobei der Kopfbereich (24) des Wirbelbrechers (20) mindestens eine, in der horizontalen Ebene gemessene Abmessung aufweist, die größer ist, als der Durchmesser einer Einlauföffnung (13) im Einlaufbereich (11) des Rohranschlusskörpers (10).

2. Tankauslauf eines Tanks gemäß Anspruch 1, wobei der Wirbelbrecher (20) zudem eine Wand (115) einer Auslauföffnung (113) im Auslaufbereich (111) des Tanks (100) nicht berührt.

3. Tankauslauf eines Tanks gemäß einem der Ansprüche 1 und 2, wobei der Wirbelbrecher (20) zudem eine Wand (15) der Einlauföffnung (13) im Einlaufbereich (11) des Rohranschlusskörpers (10) nicht berührt.

4. Tankauslauf eines Tanks gemäß einem der Ansprüche 1 bis 3, wobei der Wirbelbrecher (20) durchgängig geschlossene Oberflächen aufweist.

5. Tankauslauf eines Tanks gemäß einem der Ansprüche 1 bis 4, wobei der Fußbereich (22) des Wirbelbrechers (20) die Einlauföffnung (13) in mindestens zwei, weiter bevorzugt drei oder bevorzugt vier, Querschnitte unterteilt.

6. Tankauslauf eines Tanks gemäß einem der Ansprüche 1 bis 5, wobei der Fußbereich (22) des Wirbelbrechers (20) eine in der horizontalen Ebene gemessene maximale Abmessung aufweist, die kleiner ist, als der Durchmesser der Einlauföffnung (13).

7. Tankauslauf eines Tanks gemäß einem der Ansprüche 1 bis 6, wobei der Fußbereich (22) des Wirbelbrechers (20) vertikal angeordnete, im Wesentlichen ebene Elemente mit einer glatten Oberfläche aufweist.

8. Tankauslauf eines Tanks gemäß einem der Ansprüche 1 bis 7, wobei der Kopfbereich (24) des Wirbelbrechers (20) vertikal angeordnete, im Wesentlichen ebene Elemente mit einer glatten Oberfläche aufweist.

9. Tankauslauf eines Tanks gemäß einem der Ansprüche 1 bis 8, wobei der Fußbereich (22) mittels einer Verschraubung (26) lösbar an dem Rohranschlusskörper (10) befestigt ist.

10. Tankauslauf eines Tanks gemäß Anspruch 9, wobei die Verschraubung (26) eine Dichtung (28) aufweist, die die Verschraubung (26) außerhalb des Flüssigkeitsbereichs zum Hohlraum des Rohranschlusskörpers (10) hin abdichtet, wobei die Dichtung (28)
a. an den jeweiligen Kanten zwischen einem Deckel (27) und einer Basis (29) des Fußbereichs (22) sowie dem Deckel (27) und dem Rohranschlusskörper (10) angeordnet ist, und
b. eine konvex geformte Oberfläche zum Inneren des Rohranschlusskörpers (10) bildet.

11. Tankauslauf eines Tanks gemäß einem der Ansprüche 1 bis 10, wobei der Rohranschlusskörper (10) weiterhin einen dem Einlaufbereich (11) gegenüberliegenden und zu öffnenden Deckel (27) aufweist, an dem der Wirbelbrecher (20) befestigt ist.

12. Tankauslauf eines Tanks gemäß einem der Ansprüche 1 bis 11, wobei der Fußbereich (22) weiterhin eine kegelförmige Basis (29) aufweist.

13. Verfahren zur Montage eines Wirbelbrechers (20) am Tankauslauf (1) eines Tanks (100), aufweisend die folgenden Schritte:
a. Befestigen eines Rohranschlusskörpers (10), mit einem Einlaufbereich (11), an einem Auslaufbereich (111) eines Tanks (100);
b. Durchstecken eines Wirbelbrechers (20) vom Inneren des Tanks (100) durch den Auslaufbereich (111) des Tanks (100) und den Einlaufbereich (11) des Rohranschlusskörpers (10) hindurch in den Rohranschlusskörper (10) hinein; und
c. Befestigen des Wirbelbrechers (20) ausschließlich an dem Rohranschlusskörper (10), so dass sich der Wirbelbrecher (20) durch den Einlaufbereich (11) des Rohranschlusskörpers (10) hindurch in den Tank (100) hinein erstreckt und dabei den Tank (100) nicht berührt.

## Claims

1. A tank outlet (1) of a tank (100), comprising:
a. a tube fitting body (10), with an inlet region (11), mountable on an outlet region (111) of a tank (100);
b. a vortex breaker (20) solely mounted on the tube fitting body (10); wherein
c. the vortex breaker (20) extends through the inlet region (11) into the tank (100) and does not touch the tank (100).
d. wherein the vortex breaker (20) comprises a foot region (22) mounted on the tube fitting body (10), and a head region (24) held inside the tank (100) by the foot region (22); and
e. wherein the head region (24) of the vortex breaker (20) comprises at least one dimension measured in the horizontal plane, which is larger than the diameter of the inlet opening (13).

2. The tank outlet of a tank according to claim 1, wherein the vortex breaker (20) further does not touch a wall (115) of an outlet opening (113) in the outlet region (111) of the tank (100).

3. The tank outlet of a tank according to one of claims 1 and 2, wherein the vortex breaker (20) further does not touch a wall (15) of an inlet opening (13) in the inlet region (11) of the tube fitting body (10).

4. The tank outlet of a tank according to one of claims 1 to 3, wherein the vortex breaker (20) has continuously closed surfaces.

5. The tank outlet of a tank according to one of claims 1 to 4, wherein the foot region (22) of the vortex breaker (20) divides the inlet opening (13) into at least two, more preferably three or preferably four sections.

6. The tank outlet of a tank according to one of claims 1 to 5, wherein the foot region (22) of the vortex breaker (20) comprises a maximum dimension measured in the horizontal plane, which is smaller than the diameter of the inlet opening (13).

7. The tank outlet of a tank according to one of claims 1 to 6, wherein the foot region (22) of the vortex breaker (20) comprises vertically arranged essentially planar elements with a smooth surface.

8. The tank outlet of a tank according to one of claims 1 to 7, wherein the head region (24) of the vortex breaker (20) comprises vertically arranged essentially planar elements with a smooth surface.

9. The tank outlet of a tank according to one of claims 1 to 8, wherein the foot region (22) is detachably mounted on the tube fitting body (10) by means of a screw connection (26).

10. The tank outlet of a tank according to claim 9, wherein the screw connection (26) comprises a seal (28) sealing the screw connection (26) outside the liquid region towards the cavity of the tube fitting body (10), wherein the seal (28)
a. is arranged on the respective edges between a cover (27) and a base (29) of the foot region (22) as well as the cover (27) and the tube fitting body (10), and
b. forms a convexly shaped surface towards the inside of the tube fitting body (10).

11. The tank outlet of a tank according to one of claims 1 to 10, wherein the tube fitting body (10) further comprises an openable cover (27) opposite to the inlet region (11), which the vortex breaker (20) is mounted to.

12. The tank outlet of a tank according to one of claims 1 to 11, wherein the foot region (22) further has a conical base (29).

13. Method for mounting a vortex breaker (20) on the tank outlet (1) of a tank (100), comprising the following steps:
a. mounting a tube fitting body (10), with an inlet region (11), on an outlet region (111) of a tank (100);
b. inserting a vortex breaker (20) from inside the tank (100) through the outlet region (111) of the tank (100) and the inlet region (11) of the tube fitting body (10) into the tube fitting body (10); and
c. mounting the vortex breaker (20) solely on the tube fitting body (10), such that the vortex breaker (20) extends through the inlet region (11) of the tube fitting body (10) into the tank (100) and does not touch the tank (100).

## Revendications

1. Sortie de réservoir (1) d'un réservoir (100) comprenant :
a. un corps de raccordement de tuyau (10) avec une zone d'entrée (11) qui est fixable à une zone de sortie (111) du réservoir (100) ;
b. un brise-tourbillon (20) qui est fixé exclusivement au corps de raccordement de tuyau (10) ;
c. le brise-tourbillon (20) s'étendant à l'intérieur du réservoir (100) à travers la zone d'entrée (11) et ne touchant pas le réservoir (100) ;
d. le brise-tourbillon (20) comportant une zone de pied (22) qui est fixée au corps de raccordement de tuyau (10)et une zone de tête (24) qui est maintenue à l'intérieur du réservoir (100) par la zone de pied (22) ; et
e. la zone de tête (24) du brise-tourbillon (20) présentant une dimension, mesurée dans le plan horizontal, qui est supérieure au diamètre d'une ouverture d'entrée (13) dans la zone d'entrée (11) du corps de raccordement de tuyau (10).

2. Sortie de réservoir d'un réservoir selon la revendication 1, dans laquelle en outre le brise-tourbillon (20) ne touche pas une paroi (115) d'une ouverture de sortie (113) dans la zone de sortie (111) du réservoir (100).

3. Sortie de réservoir d'un réservoir selon une des revendications 1 et 2, dans laquelle en outre le brise-tourbillon (20) ne touche pas une paroi (15) de l'ouverture d'entrée (13) dans la zone d'entrée (11) du corps de raccordement de tuyau (10).

4. Sortie de réservoir d'un réservoir selon une des revendications 1 à 3, dans laquelle le brise-tourbillon (20) comporte des surfaces supérieures fermées de façon ininterrompue.

5. Sortie de réservoir d'un réservoir selon une des revendications 1 à 4, dans laquelle la zone de pied (22) du brise-tourbillon (20) divise l'ouverture d'entrée (13) en au moins deux, plus préférentiellement trois ou préférentiellement quatre, sections transversales.

6. Sortie de réservoir d'un réservoir selon une des revendications 1 à 5, dans laquelle la zone de pied (22) du brise-tourbillon (20) présente une dimension maximale, mesurée dans le plan horizontal, qui est inférieure au diamètre de l'ouverture d'entrée (13).

7. Sortie de réservoir d'un réservoir selon une des revendications 1 à 6, dans laquelle la zone de pied (22) du brise-tourbillon (20) comporte des éléments disposés verticalement, sensiblement plans, avec une surface supérieure lisse.

8. Sortie de réservoir d'un réservoir selon une des revendications 1 à 7, dans laquelle la zone de tête (24) du brise-tourbillon (20) comporte des éléments disposés verticalement, sensiblement plans, avec une surface supérieure lisse.

9. Sortie de réservoir d'un réservoir selon une des revendications 1 à 8, dans laquelle la zone de pied (22) est fixée de façon amovible au corps de raccordement de tuyau (10) au moyen d'un vissage (26).

10. Sortie de réservoir d'un réservoir selon la revendication 9, dans laquelle le vissage (26) comportant un joint (28) qui étanche le vissage (26) à l'extérieur de la zone de liquide en direction de l'espace creux du corps de raccordement de tuyau (10), dans laquelle le joint (28) :
a. est disposé contre les bords respectifs entre un couvercle (27) et une base (29) de la zone de pied (22) ainsi qu'entre le couvercle (27) et le corps de raccordement de tuyau (10), et
b. forme une surface supérieure conformée de manière convexe vers l'intérieur du corps de raccordement de tuyau (10).

11. Sortie de réservoir d'un réservoir selon une des revendications 1 à 10, dans laquelle le corps de raccordement de tuyau (10)comporte en outre un couvercle (27) situé à l'opposé de la zone d'entrée (11) et pouvant s'ouvrir, auquel est fixé le brise-tourbillon (20).

12. Sortie de réservoir d'un réservoir selon une des revendications 1 à 11, dans laquelle la zone de pied (22) comporte en outre une base conique (29).

13. Procédé de montage d'un brise-tourbillon (20) sur la sortie de réservoir (1) d'un réservoir (100), comprenant les étapes suivantes :
a. fixation d'un corps de raccordement de tuyau (10), avec une zone d'entrée (11) sur une zone de sortie (111) d'un réservoir (100) ;
b. insertion, dans le corps de raccordement de tuyau (10), d'un brise-tourbillon (20) par l'intérieur du réservoir (100) à travers la zone de sortie (111) du réservoir (100) et la zone d'entrée (11) du corps de raccordement de tuyau (10); et
c. fixation du brise-tourbillon (20) exclusivement sur le corps de raccordement de tuyau (10), de sorte que le brise-tourbillon (20) s'étende dans le réservoir à travers la zone d'entrée (11) du corps de raccordement de tuyau (10) et ne touche pas le réservoir (100).
